# EUROPÄISCHE PATENTANMELDUNG

(11) **EP 3 288 141 A1**
(43) Veröffentlichungstag der Anmeldung: **28.02.2018**
(21) Anmeldenummer: 17400043.0
(22) Anmeldetag: 19.07.2017
(51) Int. Cl.: H02J 3/14, H02J 3/32, H02J 3/38, H02J 9/06

(54) **AUTOMATISIERTES BATTERIESPEICHER-SYSTEM UND KRAFTWERK, ZUR ERZEUGUNG VON STROM, STABILISIERUNG DER NETZE, ERBRINGUNG VON REGELENERGIE**

(30) Priorität: 25.07.2016 DE 102016008666
(71) Anmelder: Bioenergon Green Energy Ltd, London EC3V 9DJ (GB)
(72) Erfinder: Schmitz, Edmund, 17051 Andora SV (IT)
(74) Vertreter: Schnell, Marcel

(57) **Zusammenfassung**

Automatisiertes Batterie Speicher System - BESS Kraftwerk - zur Stromerzeugung, Netzstabilisierung, Frequenz- Spannungshaltung, Schein- Blindleistungskompensation, Regelenergie, inhärent erneuerbare Energie Quellen (EEQ).

• 1. EEQ und Stromlasten sind variabel, **dadurch** entstehen Ungleichgewichte im Stromnetz. Aktuelle fossile Reservekraftwerke, wegen ihrer schwerfälligen Technik und hohen Kosten, sind nicht geeignet die Variablen auszugleichen. Die Drosselung von EE-Strom Einspeisung ist die Folge. Aktuelle Batterie SpeicherSysteme mit Primärregelenergie verursachen Kosten; eine Wirtschaftlichkeit wegen mangelnder Arbeitsleistung kann nicht erreicht werden.
• 2.1 Die Lösung:
BESS Kraftwerke mit 8740 Stunden Arbeit/Jahr. Gegenüber aktuellen Reservekraftwerken, Batterie Speichersystemen und anderen, ist das BESS Kraftwerk durch hohe Arbeitsleistung die kostengünstigste Lösung, EEQ und Lasten auszugleichen.
• 2.2 Mobile BESS Kraftwerke in großen Stückzahlen hergestellt, erreichen die flächendeckende Integrierung von EEQ, bei gleichzeitiger Bilanzierung der Netze.
• 2.3 BESS Kraftwerke in Gewerbegebieten angewendet stabilisieren Verteilnetze, Schein- und Blindleistung Kompensation, Regelenergie.
• 2.4 BESS Kraftwerk in Verbindung mit Dachsolar in Gewerbegebieten und Einkaufszentren zur Ladung von E-Fahrzeugen in wenigen Minuten, bilden mit Master Slave Konfiguration kleine Microgrids.
• 2.5 BESS-H-PVW automatisierte Microgrids sind physische Kraftwerke mit Regelleistungsfunktion.

## Beschreibung

Die Erfindung betrifft ein automatisiertes Batterie Speicher System - ein BESS Kraftwerk - zur Erzeugung von Strom, Stabilisierung der Netze, Erbringung von Regelenergie (neg. - pos. SRL - MRL - PRL), inhärente Integrierung erneuerbare Energie Quellen (EEQ),

### Aktueller technischer Stand der Reservekraftwerke (Regelenergie) und Batterie Speicher Systeme:

### Reservekraftwerke

Die EEQ sind naturbedingt variabel, dazu kommen variable Stromlasten der Verbraucher, dadurch entstehen Ungleichgewichte im Stromnetz, die ausgeglichen werden müssen, andernfalls würden die Netze zusammenbrechen. Die Bundesnetzagentur hat zur besseren Integration der erneuerbaren Energien und zum Ausgleich in den Netzen im Jahre 2008 den Regeleistungsmarkt eingeführt. Auf diesem Markt stehen konventionelle Gas- Kohle- Pumpwasserkraftwerke sowie aufschaltbare Lasten bereit. In letzter Zeit werden auch Biomasseanlagen als Reservekraftwerke für den Ausgleich im Stromnetz bereit gestellt (SRL-MRL Regelleistung). Die Reserveleistung wird wegen der schwerfälligen Reaktionszeiten der Reservekraftwerke und Biomasseanlagen im Viertelstundentakt mit Anfahr- und Rückfahrzeiten (Rampendauer) von jeweils 5 Minuten erbracht.

Eine Studie der "consentec"-Beschreibung Regelleistungskonzepte und Regelleistungsmarkt (27. Februar 2014 - Auftraggeber 50 Hertz Transmission GmbH) stellt auf Seite 27 fest:
Zitat
   - "Der Verlauf des Bedarfs an SRL(Sekundärregelleistung) weist auch innerhalb einer Viertelstunde und sogar innerhalb einzelner Minuten eine hohe Volatilität mit häufigen Vorzeichenwechseln auf, so dass innerhalb ein und derselben Viertelstunde positive und negative Abrufe von Sekundärregelenergie stattfinden können. Darüber hinaus können sich aufgrund der zwangsläufigen Trägheit der die SRL erbringenden Technischen Einheiten Soll-Signal und tatsächliche Erbringung von SRL unterscheiden. Insbesondere bei Vorzeichenwechseln im SRL Bedarf kann es deshalb z. B. dazu kommen, dass als Soll-Signal positive SRL angefordert, zur gleichen Zeit aber noch negative SRL erbracht wird oder ggf. sogar gleichzeitig positive und negative SRL erbracht werden.
   - Der Einsatz der langsameren MRL folgt dem Sekundärregelbedarf naturgemäß zeitverzögert und mit geringerer Aktivierungsgeschwindigkeit und kann nicht allen Bewegungen (und Vorzeichenwechseln) der Sekundärregelung folgen. Somit können die Abrufe der beiden Regelenergiequalitäten innerhalb einer Viertelstunde auch entgegengesetzte Vorzeichen aufweisen."

Aus dieser Studie resultiert, dass die Elektronenflüsse mit den aktuellen Techniken schlecht oder gar nicht beherrscht werden können.

Aktuell wird die Reserveleistung in den Leitständen der Übertragungs- und Verteilnetzbetreiber (Bilanzkreise) kontrolliert. Die Frequenz (50 Herz) und Spannung (1/150/ kV) wird mehr oder weniger gehalten.
Die aktuellen Reservekraftwerke und aufschaltbare Lasten haben eine zu lange Aktivierungszeit, hohe Kosten, geringe Effizienz und einen hohen Anteil fossiler Energie. Die Folge der Schwerfälligkeit ist unsauberer Strom, durch Phasenverschiebung Abweichungen der Frequenz und Spannung oder auch Stromunterbrechung.
Die Probleme können mit Reservekraftwerken und aufschaltbaren Lasten nur in geringem Maß unter hohem Kostenaufwand gelöst werden. So wurde denn auch im Juni 2012 beschlossen, die Einspeisung von EE-Strom zu drosseln, um die Netze zu entlasten. Für EE- Stromanlagen besteht Bestandsschutz, den Verlust durch die Drosselung des nicht eingespeisten EE-Stroms, tragen die Letztverbraucher.
Ein Regelwerk für Regelenergie in Europa wurde von der Vertretung der europäischen Regulierungsbehörde im März 2017 dem europäischen Verband der Übertragungsnetzbetreiber (Entso-E) in einer überarbeiteten Version vorgelegt. Mit diesem Regelwerk soll europaweit Regelenergie bereitgestellt und vermarktet werden. Das Regelwerk schafft Konkurrenz im Regelenergiemarkt löst jedoch nicht die Netzprobleme.

Die Speicherung des Stroms in aktuellen Batteriesystemen als Reserveleistung ist eine kostengünstigere Alternative.

### Aktueller Stand der Technik

Batteriespeicher und Batteriespeichersysteme werden seit ca. drei Jahren zur Steigerung des Eigenverbrauchs von EEQ eingesetzt.
1. Auf dem europäischen Markt haben sich erweiterte ununterbrochene Stromversorgungssysteme (USV) als Batteriespeicher bei Privaten und Unternehmen etabliert.
2. In letzter Zeit werden Batterie Speicherkraftwerke im MW-Bereich vereinzelt von Verteilnetzbetreibern zur Bereitstellung von Primärregelleistung eingesetzt.

Außerdem werden Batterie Speicher Systeme von Energieversorgern eingesetzt, um Stromspitzen aus erneuerbaren Energie Kraftwerken "zwischen zu speichern" (Spitzenerzeugung) und bei Bedarf wieder einzuspeisen.

### Nachteile:

Batteriespeicher und Batteriespeichersysteme in dieser Form der Anwendung oder Nutzung sind Kostenfaktoren. Allein die Spitzenerzeugung der erneuerbaren Energien aufzufangen und bei Bedarf wieder einzuspeisen oder Primärregelleistung (PRL) bereit zu stellen, ergibt keine Auslastung der Batteriespeichereinrichtungen. Aus diesem Grund werden große Batteriespeicher selten im Netzverbund zur Primärregelleistung eingesetzt. Die Bereitstellung der Primärregelleistung wird vergütet, ein wirtschaftliches Ergebnis wird jedoch wegen der kurzen Betriebszeiten nicht erzielt.
Zudem werden in einigen Batteriespeichersystemen Batterien verwendet, die wegen Ihrer technischen chemischen Zusammensetzung schlecht recycelbar sind und weitere Kosten für die Entsorgung verursachen.
Trotz vollautomatisierter Produktionsprozesse in der Industrie, wurde bisher keine Automatisierung zur Steuerung der Elektronen in Batterie-Energiespeicher entwickelt.
Nicht nur das letztbeschlossene Klimaabkommen, aber auch die stetig steigenden Strompreise, zum großen Teil bedingt durch die vorgenannten Probleme, erfordern Lösungen zu einer bezahlbaren Energiewende.

Die vorgenannten Probleme, insbesondere die vorgenannten Überschneidungen zwischen der hochwertigen SRL und langsameren MRL Regelleistung werden durch das BESS Kraftwerk gemäß Anspruch 1 und 2 in Verbindung mit den Anwendungen, Ansprüche 3,4 und 5, gelöst.
Der, mit der Automatisierung des BESS Kraftwerks erzielte Vorteil bestehet darin, dass statt einer Anwendung, die Spitzenerzeugung der erneuerbaren Energien aufzufangen und bei Bedarf wieder einzuspeisen oder Primärregelleistung (PRL) bereit zu stellen, BESS Kraftwerke 8740 Stunden im Jahr in allen nachbenannten Anwendungen dezentralisiert arbeiten und daher nicht nur wirtschaftlich interessant sind, sondern sie verhelfen den erneuerbaren Energien zu mehr Effizienz, von der Erzeugung bis hin zur Übertragung bei gleichzeitiger Kosteneinsparung für Netzbetreiber und Letztverbraucher.
BESS Kraftwerk ist eine automatisierte technisch Einheit, die aufgeteilt, jeweils SRL, MRL und PRL erbringt, wobei BESS Einheiten je nach Bedarf mit Landzeitspeichern ausgerüstet, diese drei Regelenergiequalitäten in einer einzigen Einheit erbringen können.
Der im Anspruch 1 beschriebenen Erfindung mit den aufgeführten Funktionen:
- Netz- und/oder Inselbetrieb
- Dezentrale Energieerzeugung
- Integration dezentraler erneuerbarer Energien inbegriffen
- Steuerung unterschiedlicher erneuerbarer Energiequellen
- Steuerung der Batterie Systeme (BMS Batterie Management System)
- Verbrauch- Lastmanagement - Spitzenlastglättung
- Netzdienstleistungen, Spannung- Frequenzhaltung - Blindleisungskompensation
- pos. neg., Sekunden Regelleistung (SRL), Minuten Regelleistung (MRL) Primär Regelleistung (PRL)
- Unterbrechungsfreie Stromversorgung
- Schwarzstartfähigkeit
- Ausgleich der Stromerzeugung, Spitzenglättung
- Regelung von Blind- und Scheinleistung, Flickerkompensation
- Mobile und stationäre Anwendungen je nach Anforderung
- Schnittstellen für vielfache EEQ (Erneuerbare Energiequellen) liegt das Problem zu Grunde, dass die aktuellen Batterie Speicher Systeme nicht automatisiert sind und mit nur wenigen Funktionen, wie der Frequenzhaltung, unwirtschaftlich sind.
Die Problemlösung ist das automatisierte, standarisierte BESS-Kraftwerk, das mit der Arbeitsleistung von 8740 Stunden im Jahr, ein wirtschaftliches Ergebnis erzielt und somit auf breiter Basis gewerblich anwendbar ist.

Der im Anspruch 2 beschriebenen Erfindung liegt das Problem zu Grunde, in kurzer Zeit flächendeckend mobile Standard BESS Kraftwerke (automatisierte Produktion) einzusetzen, damit der weitere Zubau von erneuerbaren Energien signifikant zunimmt bei gleichzeitiger Entlastung der Netze.
Diese Ziel wird mit den eingangs beschriebenen Funktionen des automatisierten und mobilen Standard BESS Kraftwerks erreicht, als eine von den Kosten her, notwendige wirtschaftliche Lösung durch die Auswahl spezieller Ausgangsstoffe, ausgestattet wie nachfolgend beschrieben
Skalierbare, schlüsselfertige Ausführung mit allen vorbenannten Funktionen, in Leichtbeton Containern, aber auch in isolierten Stahlcontainern mit allen Netzanschlusseinrichtungen (Netztransformator, Schaltschütze, Filter, Messstation-Smartmeter) und im Einzelnen bestehend aus anwendungsspezifischen modularen Einheiten, die in Blöcken nach Bedarf erweitert werden können.
Die Standard-BESS Kraftwerk Container beinhalten
1.den Netzbereich mit bidirektionalen Wechselrichtern, MS/NS Schaltanlage, MS/NS Trafostation, Controller, Umrichter AC/DC, Steuerzentrale, bidirektionale Smartmeter.
2.den separierten Batteriebereich mit seriell und parallel verschalteten, umweltverträglichen Batteriesystemen und Batterie Management Systeme (BMS)
   Die modularen Container Einheiten sind derart gestaltet, dass sie je nach Bedarf seriell oder parallel verschaltet werden können, ausgestattet mit allen Schutzeinrichtungen (DC-Überspannung, Überstrom und Übertemperatur, Schutz zur Verhinderung des direkten Kontakts) BESS Kraftwerk Standard Ausstattung:
   - Bidirektionale Wechselrichter mit hoher Spitzenleistung
   - DC-AC-Filter
   - Digitale Controller
   - Batteriecontainer
   - Batterie Management System (BMS) und Sensoren
   - Batterieschütze
   - Master Controller (MC)
   - Isolationswiderstand-Überwachung auf der DC-Seite
   - Netzanschlusstransformator, Filter
   - Netz-Schnittstellenschutz (inkl. Spannungs-Frequenzrelais und elektromechanischer Schütz)
   - Leistungsanschlüsse
   - Touch Screen Display
   - Stromversorgungen, Lüfter, Klimatisierung
   - Kommunikationsschnittstellen (RS485 mit CAN-Bus und MODBUS Protokollen)
   - Messstation bidirektionale Smartmeter
   - Betriebsschutzeinrichtungen gegen Cyberangriffe Leistungsanschlüsse
   - Touch Screen Display
   - Zubehör (Stromversorgungen, Lüfter, Kommunikationsschnittstellen)
   - Kommunikationsschnittstellen (RS485 mit CAN-Bus und MODBUS Protokollen)
   - bidirektionale Messstation
   Der im Anspruch 3 beschriebenen Erfindung liegt das Problem zu Grunde, die Netze wirksam zu entlasten durch den flächendeckenden Einsatz von BESS Kraftwerken, und in erster Linie, zu erreichen durch Standorte bei Großverbrauchern und im Besonderen bei Einkaufszentren wie im Anspruch 3 gekennzeichnet, mit dem Ziel mehr Integration von Dachsolar zu erreichen.
3.BESS Kraftwerke nach Anspruch 1 und 2
   dadurch gekennzeichnet
   dass das BESS Kraftwerk direkt bei großen Verbrauchern (Industrie und Gewerbegebiete mit großen Lasten) angewendet, die Verteilnetze entlastet ohne Kosten für Verteilnetzbetreiber mit den folgenden Vorteilen für die Unternehmen:
   - Optimierter Stromeinkauf
   - Flickerkompensation (Spannungsspitzen und Spannungsschwankungen)
   - Vermeidung von Spitzenlasten (Lastmanagement)
   - Oberschwingungs- und Blindleistungskompensation (reine Sinuswelle)
   - Internes Verteilernetz liefert sauberen Strom für empfindliche elektronische Geräte
   - Verlängerung der Lebensdauer der Geräte und der industriellen Anlagen
   - Vermeidung von Strom-Bezugsüberschreitung
   - automatisierte Teilnahme am Regelleistungsmarkt (pos. - neg. SRL Haupt- und Nebenzeiten)
   - Ladestationen für E-Fahrzeuge bei Einkaufzentren. Erst durch die hohe Ampereleistung von BESS Kraftwerken in Verbindung mit Solarcarports wird die minutenschnelle Ladung von E-Bikes, Pedelecs, Elektro-PKWs während des Einkaufs (15-20 Minuten) ermöglicht.
   Das normale Stromnetz (MS) hat keine ausreichenden Kapazitäten (Voltampere), um eine Vielzahl von Elektrofahrzeugen in wenigen Minuten zu laden.
   Der im Anspruch 4 beschriebenen Erfindung liegt das Problem zu Grunde, dass durch Phasenverschiebungen bewirkte Schein- und Blindleistung die Verteilnetze derart belastet, dass im Extremfall keine Wirkleistung mehr zur Verfügung steht. Die Blindleistung muss kompensiert werden und das möglichst nahe an der Quelle, der Umspannstation, damit das Netz für die Übertragung von Wirkleistung frei von Ballast bleibt. BESS Kraftwerke entlasten die Netze wirksam von Schein- und Blindleistung.
4. BESS Kraftwerke nach Patentanspruch 1 und 2
   dadurch gekennzeichnet
   dass die Anwendung an Netzknotenpunkten NS/MS/HS durch die automatisierte Bilanzierung der Verteilnetze die Kosten der Leitstände signifikant reduziert werden mit gleichzeitiger Einsparung von Netzausbauten und Blindleistungskompensation.
   - BESS Kraftwerke zur Erzeugung von Regelenergie mit automatisch steuerbaren Lasten
   - Spannungsregelung im Hoch-, Mittel- und Niederspannungsnetz
   - Koordinierte Spannungs- und Blindleistungsregelung
   - Erkennung von Engpässen auf der Basis von Last-Erzeugungsprognosen und automatisierter Engpass-Beseitigung
   - automatisierte Teilnahme am Regelleistungsmarkt
   Der im Anspruch 5 beschriebenen Erfindung liegt das Problem zu Grunde, dass erneuerbare Energie in ruralen Gebieten dezentral erzeugt, aber nicht in den Hauptzeiten verbraucht wird. Weit über 600 Energiegenossenschaften suchen nach einer kostenneutralen Lösung. Die Bildung von Microgrids kann das Problem lösen.
5. BESS Kraftwerke nach Patentanspruch 1 und 2
   dadurch gekennzeichnet
   dass BESS Kraftwerke mit Hybrid Funktion (BESS - H-PVW Kraftwerke)und Master Slave Konfiguration zur Bildung von Microgrids d.h. zur Dezentralisierung der Stromversorgung, angewendet werden, BESS Microgrids reduzieren die Kosten, und erhöhen die Effizienz und Integration der Erneuerbaren Energien durch deh Direktverbrauch, BESS Kraftwerke mit Master Slave Funktion im Microgrid entlasten das vorgelagerte Verteilnetz, die Automatisierung erlaubt die Teilnahme als physisches Kraftwerk am Regelleistungsmarkt, pos. und neg. SRL/MRL/PRL Regelleistung und sorgt dafür, dass die Stromerzeugung aus den EE-Quellen direkt zum Verbraucher gelangt, wodurch sich die Kosten für Infrastruktur und Vorhaltung fossiler Energieträger signifikant verringern bzw. erübrigen
   HPVW-Microgrids sind außerdem eine kostengünstige Alternative zu großen Verteilnetzen und Stromtrassen.
   Obwohl ihr hierarchischer Aufbau stark variiert, wird mit dem entwickelten Master/Slave Controller im Zusammenspiel mit den Konvertern eine flexible Steuerung erreicht, die sich automatisch den unterschiedlichsten Bedingungen anpasst.
   Das Problem (Stromtrassen) Übertragungs- und Verteilznetzausbau wird durch hierarchische, dezentralisierte Netze unter Anwendung von BESS H-PVW Kraftwerken gelöst.
   Automatisierte, dezentralisierte, hierarchisch angeordnete Microgrids werden weltweit nachgefragt.

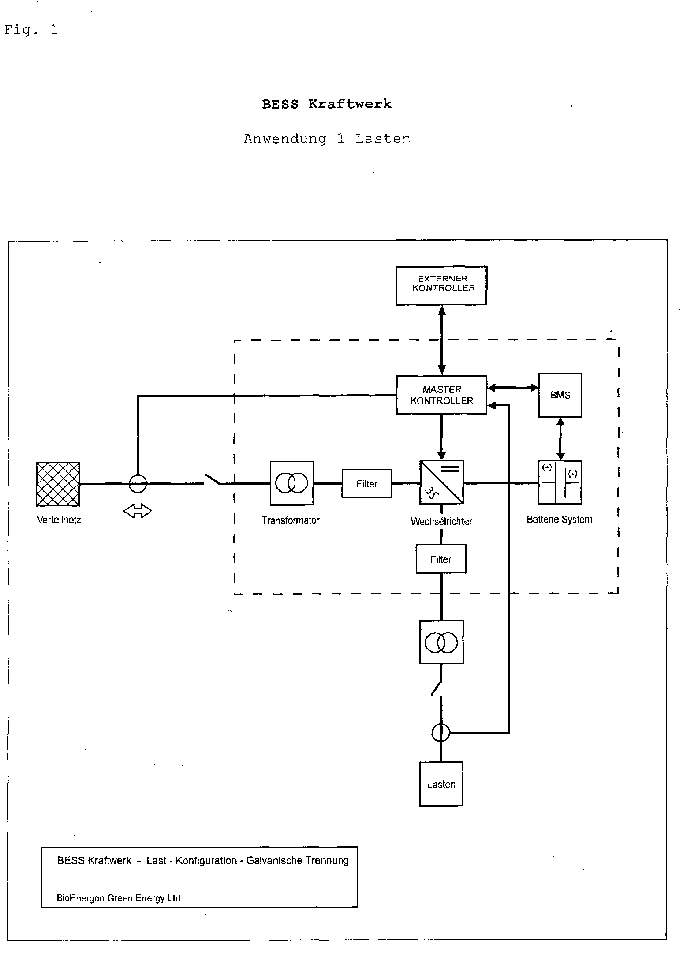

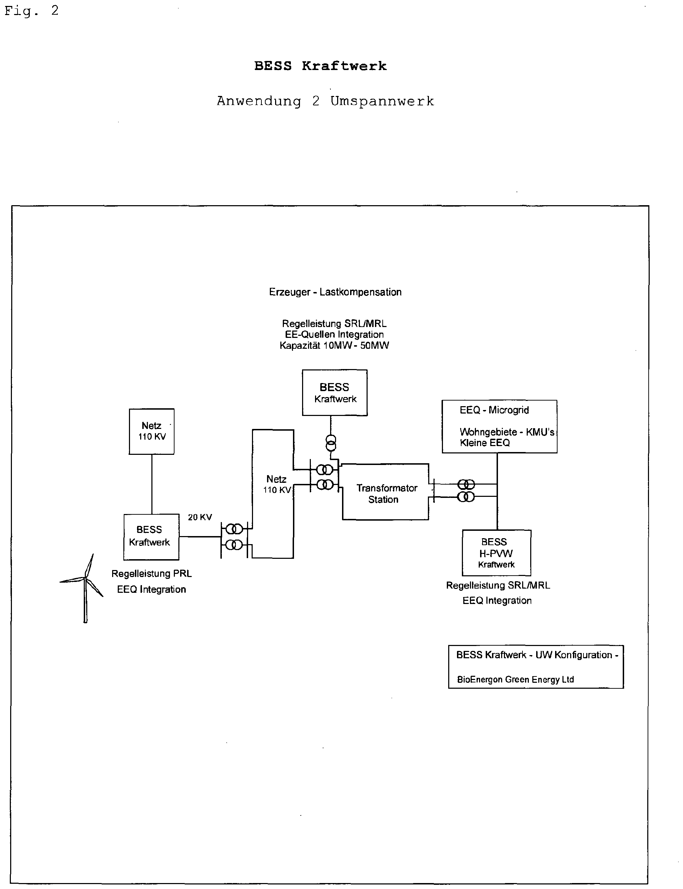

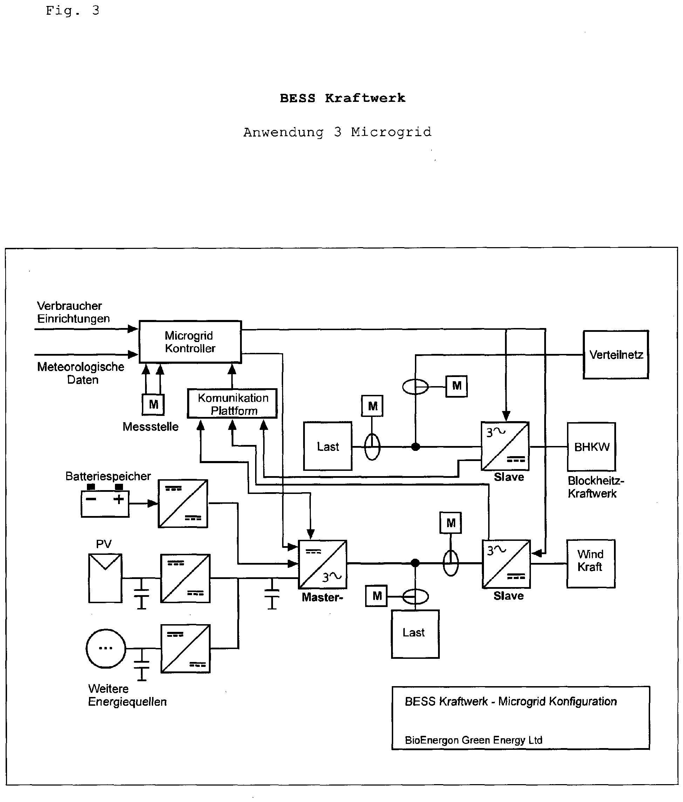

## Patentansprüche

1. Ein automatisiertes Batterie Energie Speicher System - ein BESS Kraftwerk - zur Erzeugung elektrischer Energie, Stabilisierung der Netze, Erbringung von Regelenergie, inhärente Integrierung von erneuerbare Energie Quellen (EEQ,
**dadurch gekennzeichnet, dass**
die schlecht kontrollierbaren Elektronenflüsse(Stromflüsse) in bidirektionaler Richtung kontrolliert und punktgenau gesteuert werden mittels eines automatisierten Batterie Energie Speicher Systems, ein BESS Kraftwerk, welches als eine elektrische Energie Erzeugungseinheit¹, die Steuerung aller Elektronenflüsse in bidirektionalen Richtungen kontrolliert, mittels folgender Funktionen
• Netz- und/oder Inselbetrieb
• Dezentrale Energieerzeugung (BESS Kraftwerk im Microgrid)
• Integration erneuerbarer Energien
• Steuerung unterschiedlicher erneuerbarer Energiequellen
• Steuerung der Batterie Systeme (BMS)
• Lastmanagement - Spitzenlastglättung bei Verbrauchern
• Netzdienstleistungen, Spannung- Frequenzhaltung
• Blindleisungskompensation
• pos. neg., Sekunden Regelleistung (SRL), Minuten Regelleistung (MRL)
• Unterbrechungsfreie Stromversorgung
• Schwarzstartfähigkeit
• Ausgleich Stromerzeugung, Spitzenglättung
• Regelung von Blind- und Scheinleistung, Flickerkompensation
• Mobile und stationäre Anwendungen je nach Anforderung
• Schnittstellen für vielfache EEQ (Erneuerbare Energiequellen), wodurch die naturbedingte Volatilität der erneuerbaren Energie Quellen (EEQ) ausgeglichen wird und fossile Reserve- Kraftwerke ersetzt werden können.

2. BESS Kraftwerk zur Durchführung des Verfahrens gemäß Anspruch 1
**dadurch gekennzeichnet, dass**
ein mobiles voll automatisiertes Standard BESS Kraftwerk eine wirtschaftliche Lösung darstellt durch eine automatisierte Produktion, skalierbare, schlüsselfertige Ausführung mit allen vorbenannten Funktionen in Leichtbeton Containern, aber auch in isolierten Stahlcontainern ausgestattet mit allen Netzanschlusseinrichtungen, Netztransformator, Schaltschütze, Filter, Messstation-Smartmeter und im Einzelnen bestehend aus anwendungsspezifischen modularen Einheiten, die in Blöcken erweitert und je nach Anforderung von Leistung und Kapazität, untereinander verschaltet werden können, bestehend aus
a. einem Netzbereich mit bidirektionalen Wechselrichtern, MS/NS Schaltanlage, HS/MS/NS Transformator Station, Controller, Umrichter AC/DC, Steuerzentrale, bidirektionalen Smartmetern.
b. einem separierten Batteriebereich mit seriell und parallel verschalteten, umweltverträglichen, hochleistungsfähigen Batteriesystemen, Batterie Management System (BMS)und Kontrolle jeder einzelnen Batteriezelle
ausgestattet mit
Schutzeinrichtungen (DC-Überspannung, Überstrom und Übertemperatur, Schutz zur Verhinderung des direkten Kontakts, sowie
• Bidirektionale Wechselrichter mit hoher Spitzenleistung
• AC-Filter zur Verringerung des Oberschwingungsanteils am Inverter-Ausgang
• EMI-Filter auf der DC und AC Seite
• Digitale Controller
• Batterie Management System (BMS) mit plus-minus Sensoren
• Batterieschütze
• Master Controller (MC)
• Isolationswiderstand-Überwachung auf der DC-Seite
• Netzanschlusstransformator, Filter
• Netz-Schnittstellenschutz (inkl. Spannungs-Frequenzrelais und elektromechanischer Schütz)
• Leistungsanschlüsse
• Touch Screen Display
• Stromversorgungen, Lüfter, Klimatisierung
• Kommunikationsschnittstellen (RS485 mit CAN-Bus und MODBUS Protokollen)
• Messstation bidirektionale Smartmeter
• Betriebsschutzeinrichtungen gegen Cyberangriffe
hergestellt in automatisierten Produktionsverfahren zur flächendeckenden Anwendung, um die Stromnetze auf allen Spannungsebenen zu stabilisieren, wodurch eine 100%ige Integration von EEQ ermöglicht wird, die Netze, aber auch die Verbraucher, entlastet werden und durch die hohe Effizienz und Millisekunden schnellen Reaktionszeiten die Kosten der Stromerzeugung signifikant sinken.

3. BESS Kraftwerk zur Durchführung der Anwendung gemäß Ansprüche 1 und 2
**dadurch gekennzeichnet dass**,
das BESS Kraftwerk direkt bei Verbrauchern mit mittleren und großen Lasten, Industrie und Gewerbegebiete angewendet, die Verteilnetze entlastet ohne Kosten für den Verteilnetzbetreiber, aber mit Einsparungen für eventuell anfallende Netzausbauten und folgenden Vorteilen für die Unternehmen
• Optimierter Verbrauch und Stromeinkauf
• Flickerkompensation (Spannungsspitzen und Spannungsschwankungen)
• Vermeidung von Spitzenlasten (Lastmanagement)
• Oberschwingungs- und Blindleistungskompensation (reine Sinuswelle)
• ununterbrochener Stromversorgung
• Internes Verteilernetz liefert sauberen Strom für empfindliche elektronische Geräte
• Verlängerung der Lebensdauer der Geräte und der industriellen Anlagen
• Vermeidung von Strom-Bezugsüberschreitung (Verteilnetzentlastung)
• automatisierte Teilnahme am Regelleistungsmarkt (pos. - neg. SRL Haupt- und Nebenzeiten)
• Ladestationen für E-Fahrzeuge auf Parkplätzen von Unternehmen und Einkaufzentren, da erst durch die hohe Ampereleistung von skalierbaren BESS Kraftwerken in Verbindung mit Solarcarports die minutenschnelle Ladung von Elektro-LKWs/PKWs, E-Roller, E-Bikes, Pedelecs, während des Einkaufs (10-20 Minuten) ermöglicht wird, denn das normale Stromnetz (NS/MS) hat keine ausreichenden Voltampere, um eine Vielzahl von Elektrofahrzeugen in wenigen Minuten zu laden.

4. BESS Kraftwerk zur Durchführung der Anwendung gemäß Ansprüche 1 und 2
**dadurch gekennzeichnet**
**dass** die Anwendung an Netzknotenpunkten HS/MS/NS durch die automatisierte Bilanzierung der Verteilnetze die Kosten der Leitstände wegfallen oder signifikant reduziert werden, mit gleichzeitiger Einsparung von Netzausbauten und mit den folgenden Vorteilen für Übertragungs-Verteilnetzbetreiber wie,
• die automatisch steuerbaren Lasten als Ersatz von aufschaltbaren Lasten (neg. Reserveleistung)
• die Koordinierte Spannungs- Schein- und Blindleistungsregelung
• die Spannungs- und Frequenzhaltung
• die Erkennung von Engpässen auf der Basis von Last-Erzeugungsprognosen und automatisierter Engpass-Beseitigung
• die automatisierte Teilnahme am Regelleistungsmarkt (pos. - neg. PRL/SRL/MRL Haupt- und Nebenzeit)

5. BESS Kraftwerk zur Durchführung der Anwendung gemäß Ansprüche 1 und 2
**dadurch gekennzeichnet, dass**
das BESS Kraftwerk mit Hybrid und Master Slave Funktion (BESS - H-PVW Kraftwerk) mit direkter Integrierung von EEQ die Bildung von sicheren Microgrids durch die folgenden Eigenschaften ermöglicht
- hohe Widerstandsfähigkeit gegen Gefahren aller Arten
- hohe Zuverlässigkeit für den alltäglichen Betrieb
- hohe Sicherheit vor dem Hintergrund neuer Bedrohungen (Cyberangriffe).
- höchste Flexibilität, um auf Variabilität, inklusive zukünftiger Energieoptionen
- jederzeit integrierbare, erneuerbare Energieressourcen
- Master Slave Funktion zur Entlastung des vorgelagerten Verteilnetzes
- Teilnahme am PRL, SRL, MRL Regelleistungsmarkt teil
- einfache Integrierung von Dachsolar
- die Integration von Wettervorhersagen für Wind- und Solarenergie mit dem Vorteil, durch Dezentralisierung die Energieversorgung sicherzustellen.
